# EUROPEAN PATENT SPECIFICATION

(11) **EP 4 602 137 B1**
(45) Date of publication and mention of the grant of the patent: **02.12.2026**
(21) Application number: 23789278.1
(22) Date of filing: 09.10.2023
(51) Int. Cl.: C10L 1/14, C08L 61/34, C08L 95/00, C10L 10/18, C10M 157/04, C10L 1/198, C10L 1/238, C10N 30/04

(54) **ADDITIVE COMPOSITION AND USE THEREOF AS ASPHALTENE DISPERSANT IN PETROLEUM PRODUCTS**
ADDITIVZUSAMMENSETZUNG UND VERWENDUNG DAVON ALS ASPHALTENDISPERGIERMITTEL IN ERDÖLPRODUKTEN
COMPOSITION D'ADDITIF ET SON UTILISATION EN TANT QUE DISPERSANT D'ASPHALTÈNE DANS DES PRODUITS PÉTROLIERS

(30) Priority: 11.10.2022 EP 22306533
(43) Date of publication of application: 20.08.2025
(73) Proprietor: TotalEnergies OneTech, 92400 Courbevoie (FR)
(72) Inventor: MONDKAR, Hemant Sunanda Surendra, 69360 SOLAIZE (FR); TORT, Frederic, 69360 SOLAIZE (FR)
(74) Representative: Casalonga
(86) International application number: PCT/EP2023/077900
(87) International publication number: WO 2024/079049

(56) References cited:
- US-A1- 2004 050 752
- US-A1- 2009 090 655
- US-A1- 2018 079 976

## Description

The present invention relates to a novel additive composition comprising a combination of two particular resins.

The present invention also relates to the use of such a composition as an additive in a petroleum product such as a crude oil or any product which results therefrom by any refining and/or extraction process. The additive composition of the invention is especially useful for dispersing asphaltenes in petroleum products.

The invention also encompasses a petroleum product comprising such an additive composition, as well as a method for preventing the precipitation of asphaltenes present in a petroleum product, wherein an additive composition as defined herein is added.

### PRIOR ART AND BACKGROUND OF THE INVENTION

Crude oils mainly contain two categories of products: maltenes and asphaltenes. The maltenes mainly contain oils (saturated hydrocarbon compounds and aromatics) and resins. The asphaltenes comprise highly polar entities which have a tendency to combine together to form agglomerates. They constitute the heaviest component of crude oils. Asphaltenes are composed of molecules comprising fragments of polycycles, polyaromatics, short aliphatic chains, heteroatoms, such as N, O or S, and metals (for example Ni, V or Fe). They are insoluble in alkanes, such as n-pentane or n-heptane, but they are soluble in aromatic solvents, such as toluene or xylene. The interaction of asphaltenes with their environment is a complex phenomenon which is difficult to control.

The asphaltenes are generally present in crude oils as well as in many products derived from the refining thereof, such as in particular heavy oils and residues. They have a high tendency to precipitate in petroleum production wells, in pipelines and more generally on the surface of any installation in contact with a product containing them.

The precipitation of asphaltenes shall be avoided all the more that it can cause problems of clogging of filters and plugging of pipes. This phenomenon results in a loss in productivity and a reduction in the transportation flows. Without a treatment which makes it possible to prevent such precipitations, the frequency of the operations for the maintenance of the production sites of crude oils as well as of the transportation equipment and handling plants represents a major economic burden.

Several factors can promote the precipitation of asphaltenes in a petroleum product, such as a rise in pressure, a rise in temperature, variations in composition, in particular due to injection of material into the crude oil or into the derived product, for example the arrival of a drilling mud in the reservoir, a mixture of crude oils or an injection of gas or of another fluid.

The composition of the crude oils and of the derived products also influences the phenomenon of precipitation of the asphaltenes: light oils, exhibiting a low content of asphaltenes, are rich in alkanes in which asphaltenes are not very soluble, and the latter have a tendency to precipitate from this medium. Heavy oils, rich in asphaltenes, comprise high amounts of intermediate compounds which are good solvents for asphaltenes and delay or prevent their precipitation. However, in crude oils, the precipitation of asphaltenes often brings about the coprecipitation of other components, such as resins or waxes.

In underground formations, the injection of fluids and the application of high pressures result in the adsorption of residues on the rock and a fall in the permeability which can bring about blocking of the reservoir. During the refining operations, the rise in temperature applied to the crude oils causes problems of coking and of fouling in the distillation columns and on the heat exchangers, and also deactivation of catalysts. During the transportation of the oil products (crude and refined), the pressure applied to the fluid can result in the sealing of the pipes. These phenomena are largely attributable to the precipitation of the asphaltenes. The losses in production and the remediable operations which result therefrom represent major costs.

The present invention aims at providing a novel additive composition which is effective in dispersing asphaltenes in crude oils as well as in products dériving therefrom and which therefore makes it possible to avoid the difficulties described above.

Additives are known and are currently used to limit the precipitation of asphaltenes. Ungrafted alkylphenol resins have been described for this use in the paper Energy & Fuels, 2009, 23, 1575-1582, and in U.S. Pat. No. 5,021,498. Polyethylenepolyamine-formaldehyde alkylphenol resins have been described in U.S. Pat. No. 5,494,607 for the same application.

Modified alkylphenol-aldehyde resins, obtained by a Mannich reaction of an alkylphenol-aldehyde condensation resin with at least one aldehyde and at least one hydrocarbon compound having at least one alkylamine group, are known for their use as asphaltene dispersant as disclosed in WO 2016/162392.

There however remains a need for providing improved asphaltene dispersants which exhibit a better efficiency than those disclosed in the prior art. There also remains a need for providing additives which are efficient for dispersing the different types of asphaltene compounds which can be present in all kinds of crude oils and products derived therefrom such as heavy oils and residues.

### OBJECT OF THE INVENTION

The Applicant has now discovered that a specific combination of two different resins, as defined below, was particularly efficient for dispersing asphaltenes and preventing the precipitation thereof in crude oils whatever their origin, as well as in petroleum products derived from such crude oils.

The present invention therefore concerns an additive composition comprising:
(a) at least one resin obtainable by condensation of at least one phenol substituted by a hydrocarbon group having from 12 to 24 carbon atoms with at least one aldehyde having from 1 to 8 carbon atoms; and
(b) at least one modified alkylphenol-aldehyde resin obtainable by a Mannich reaction of an alkylphenol-aldehyde condensation resin with at least one aldehyde and/or one ketone having from 1 to 8 carbon atoms and at least one hydrocarbon compound having at least one alkylamine group having from 1 to 30 carbon atoms,
said alkylphenol-aldehyde condensation resin being itself obtainable by condensation of
- at least one alkylphenol substituted by at least one linear or branched alkyl group having from 1 to 30 carbon atoms with
- at least one aldehyde and/or one ketone having from 1 to 8 carbon atoms
the composition containing said resins (a) and (b) in a ratio by weight (a):(b) ranging from 5:95 to 95:5.

The additive composition comprising said resins (a) and (b) has an excellent solubility in crude oils as well as in petroleum products and is not harmful to human beings and to the environment. It does not give rise to corrosive or other aggressive products, or to solid products which may plug lines or deposit in storage vessels.

Such additive composition is very effective in keeping asphaltenes dispersed in a hydrocarbon matrix and in avoiding or delaying the phenomena of agglomeration and precipitation of asphaltenes. The composition is more effective than many additives already known in the prior art for dispersing asphaltenes. They are effective even when used at low treatment rates and over a great variety of crude oils whatever their compositions.

The present invention further concerns the use of such a composition as an additive in a petroleum product, as well as a petroleum product comprising such an additive composition.

The invention also encompasses a method for preventing the precipitation of asphaltenes present in a petroleum product, comprising a step of adding an additive composition as defined herein to said product.

Other objects, features, aspects and advantages of the invention will become more apparent upon reading the following description and examples.

In the following, and at least one other indication, the limits of a value range are included within this range, particularly in the expressions "between" and "ranging from ... to ...".

Moreover, the expressions "at least one" and "at least" used in the present description are respectively equivalent to the expressions "one or more" and "more than or equal to".

Finally, in a manner known per se, C_{N} compound or group designates a compound or a group containing in its chemical structure N carbon atoms.

### DETAILED DESCRIPTION

### The first resin (a)

Said resin (a) is by obtainable by condensation of a phenol substituted by a hydrocarbon group having from 12 to 24 carbon atoms with at least one aldehyde having from 1 to 8 carbon atoms.

Resin (a) is different from alkylphenol-aldehyde resins (b) obtainable by a Mannich reaction as described herein.

Said phenol is preferably substituted in meta position, and more preferably corresponds to formula (I) below 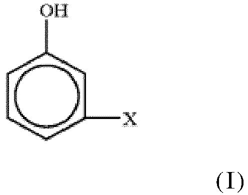 wherein X denotes a linear of branched, saturated on unsaturated hydrocarbon group containing from 12 to 24 carbon atoms, preferably from 12 to 18 carbon atoms and more preferably from 14 to 16 carbon atoms. Most preferably, X denotes an alkyl or alkenyl group.

A particularly preferred compound is cardanol, which is a compound of formula (I) wherein X denote an alkenyl group with an average number of 15 carbon atoms and 1 to 3 double bonds.

Cardanol can be obtained in a known manner from an oil that is itself obtained from the shell of cashew kernels also known as cashew nutshell liquid.

The aldehyde used for obtaining said resin (a) preferably contains from 1 to 4 carbon atoms. Said aldehyde is preferably chosen from formaldehyde, acetaldehyde, propionaldehyde, butyraldehyde, 2-ethylhexanal, benzaldehyde and mixtures thereof, and more preferably from formaldehyde.

### The second resin (b)

The modified alkylphenol-aldehyde resin (b) is obtainable by a Mannich reaction of an alkylphenol-aldehyde condensation resin with:
- at least one aldehyde and/or one ketone having from 1 to 8 carbon atoms; and
- at least one hydrocarbon compound having at least one alkylmonoamine or alkylpolyamine (alkylamine) group having between 1 and 30 carbon atoms.

Said alkylphenol-aldehyde condensation resin is itself obtainable by condensation of
- at least one alkylphenol substituted by at least one linear or branched alkyl group having from 1 to 30 carbon atoms, with
- with at least one aldehyde and/or one ketone having from 1 to 8 carbon atoms.

According to a preferred embodiment, the modified alkylphenol-aldehyde resin is obtainable by a Mannich reaction of an alkylphenol-aldehyde condensation resin with:
- at least one aldehyde and/or one ketone having from 1 to 4 carbon atoms; and
- at least one hydrocarbon compound having at least one alkylmonoamine or alkylpolyamine (alkylamine) group having between 4 and 30 carbon atoms,
   said alkylphenol-aldehyde condensation resin is itself obtainable by condensation of
- at least one monoalkylphenol substituted by at least one linear or branched alkyl group having from 1 to 30 carbon atoms, with
- at least one aldehyde and/or one ketone having from 1 to 4 carbon atoms.

Said alkylphenol-aldehyde condensation resin can be chosen from any resin of this type already known and in particular those described in EP 311 542, EP 857 776 and EP 1 584 673.

Said alkylphenol-aldehyde condensation resin is advantageously obtained from at least one para-substituted alkylphenol. Use is preferably made of para-nonylphenol.

The average number of phenol nuclei per molecule of nonylphenol-aldehyde resin is preferably greater than 6 and less than or equal to 25, more preferably from 8 to 17 and more preferably still from 9 to 16 phenol nuclei per molecule. The number of phenol nuclei can be determined by nuclear magnetic resonance (NMR) or gel permeation chromatography (GPC).

According to a preferred embodiment, the modified alkylphenol-aldehyde resin is obtained by employing one and the same aldehyde or one and the same ketone as the aldehyde or ketone used for preparing said alkylphenol-aldehyde condensation resin.

According to a preferred embodiment, the modified alkylphenol-aldehyde resin is obtained from at least one aldehyde and/or ketone chosen from formaldehyde, acetaldehyde, propionaldehyde, butyraldehyde, 2-ethylhexanal, benzaldehyde or acetone. Preferably, the modified alkylphenol-aldehyde resin is obtained from at least one aldehyde and preferably from formaldehyde.

According to a specific embodiment, the modified alkylphenol-aldehyde resin is obtained from at least one alkylamine having at least one primary and/or secondary amine group. In particular, the alkylamine is advantageously chosen from primary or secondary amines respectively substituted by one or two alkyl groups preferably comprising from 12 to 24 carbon atoms, more preferably from 12 to 22 carbon atoms.

According to a preferred embodiment, the modified alkylphenol-aldehyde resin is obtained from at least one alkylmonoamine or from at least one alkylpolyamine having at least one primary amine group. In particular, the modified alkylphenol-aldehyde resin can advantageously be obtained from at least one alkylmonoamine or from at least one alkylpolyamine, all the amine groups of which are primary amines.

The alkylamine is preferably an alkylmonoamine or an alkylpolyamine comprising a fatty chain having from 12 to 24 carbon atoms, preferably from 12 to 22 carbon atoms. Use is more preferably made of an alkylpolyamine having at least one primary amine group, preferably at least two primary amine groups and more preferably three primary amine groups, and comprising a fatty chain having from 12 to 24 carbon atoms, preferably from 12 to 22 carbon atoms.

The commercial alkylamines are generally not pure compounds but mixtures. Mention may in particular be made, among the marketed alkylamines which are suitable, of the alkylamines comprising a fatty chain sold under the Noram^{®}, Trinoram^{®}, Duomeen^{®}, Dinoram^{®}, Triameen^{®}, Armeen^{®}, Polyram^{®}, Lilamin^{®} and Cemulcat^{®} names. Mention may be made, as preferred example, of Trinoram^{®} S, which is a tallow dipropylenetriamine, also known under the name N-(tallowalkyl)dipropylenetriamine.

According to a particularly preferred embodiment, the modified alkylphenol-aldehyde resin is obtainable by a Mannich reaction of an alkylphenol-aldehyde condensation resin with formaldehyde and at least one alkylpolyamine having at least two primary amine groups and comprising a fatty chain having from 12 to 22 carbon atoms; said alkylphenol-aldehyde condensation resin being itself obtainable by condensation of para-nonylphenol and formaldehyde.

### The additive composition

The composition of the invention contains said resins (a) and (b) in a ratio by weight (a):(b) ranging from 5:95 to 95:5, preferably from 1:10 to 10:1.

According to a preferred embodiment, the composition of the present invention further contains one or more liquid organic solvent(s). By liquid, it is meant a solvent which is in liquid form at ambient temperature (20°C) and atmospheric pressure (1,013.10⁵ Pa).

Such solvents may in particular be chosen from poly alkyl ethers, aliphatic hydrocarbons such as alkanes, aromatic solvents such as aromatic hydrocarbons and aromatic hetero-compounds, and mixtures thereof.

Preferred organic solvents are chosen from aromatic solvents, such as N-methylpyrrolidone, xylene, toluene, benzene; and poly alkyl ethers such as butyl carbitol (diethylene glycol monobutyl ether); as well as mixtures thereof.

Other preferred organic solvents include those derived from biomass, such as oils of vegetable origin. A particularly preferred solvent is cashew nutshell liquid, also known as CSNL, which is a widely available vegetable oil derived from cashew nut shell. CNSL can be used as a mixture with any other solvent such as those described herein.

The composition of the invention may contain an amount of solvent ranging from 25 to 95% by weight, preferably from 40 to 90%wt of the composition, more preferably from 50 to 80%wt, relative to the total weight of the composition.

When it contains a solvent, the composition advantageously contains said resins (a) and (b) in a total amount ranging from 5 to 75% by weight, preferably from 10 to 60% by weight, more preferably from 20 to 50% by weight, relative to the total weight of the composition.

The additive composition may further contain one or more additional additives, different(s) from resins (a) and (b) described above.

Mention may be made, as additional optional additives, of: dispersants/detergents, metal passivators, antioxidants, corrosion inhibitors, biocides, demulsifiers, antifoam agents, paraffin deposition inhibitors, pour point lowering agents, paraffin anti-settling additives, H2S scavengers, organic deposit inhibitors, such as naphthenic acids, mineral deposit inhibitors, labels, heat stabilizers, emulsifiers, friction reducers, surfactants, reodorants and their mixtures.

Preferred additional additives are:
i) antifoam additives, in particular (but non limitatively) chosen from polysiloxanes, oxyalkylated polysiloxanes and amides of fatty acids resulting from vegetable or animal oils;
ii) detergent additives and/or corrosion inhibitors, in particular (but non limitatively) chosen from the group consisting of amines, succinimides, alkenylsuccinimides, polyalkylamines, polyalkylpolyamines, polyetheramines and imidazolines;
iii) lubricating additives or antiwear agents, in particular (but non limitatively) chosen from the group consisting of fatty acids and their ester or amide derivatives, in particular glycerol monooleate, and derivatives of mono- and polycyclic carboxylic acid;
iv) crystallization-modifying additives, additives which inhibit paraffin deposits, additives which lower the pour point; modifiers of the rheology at low temperature, such as ethylene/vinyl acetate (EVA) and/or ethylene/vinyl propionate (EVP) copolymers, ethylene/vinyl acetate/vinyl versatate (E/VA/VeoVA) terpolymers; ethylene/vinyl acetate/alkyl acrylate terpolymers; EVA copolymers modified by grafting; polyacrylates; acrylates/vinyl acetate/maleic anhydride terpolymers; amidated maleic anhydride/alkyl (meth)acrylate copolymers capable of being obtained by reaction of a maleic anhydride/alkyl (meth)acrylate copolymer and of an alkylamine or polyalkylamine having a hydrocarbon chain of 4 to 30 carbon atoms, preferably of 12 to 24 carbon atoms; amidated α-olefin/maleic anhydride copolymers capable of being obtained by reaction of an α-olefin/maleic anhydride copolymer and of an alkylamine or polyalkylamine, it being possible for the α-olefin to be chosen from C10-C50 α-olefins, preferably from C16-C20 α-olefins, and the alkylamine or the polyalkylamine advantageously having a hydrocarbon chain of 4 to 30 carbon atoms, preferably of 12 to 24 carbon atoms. Mention may be made, as examples of terpolymers, of those which are described in EP01692196, WO2009/106743, WO2009/106744, U.S. Pat. No. 4,758,365 and U.S. Pat. No. 4,178,951;
v) antioxidants, for example of hindered phenolic type or aminated of alkylated para-phenylenediamine type;
vi) metal passivators;
vii) acidity neutralizers.

### The use

The additive composition as described above is particularly useful for dispersing asphaltenes in petroleum products. Said composition can especially be used for preventing or reducing the precipitation of asphaltenes present in a petroleum product.

According to a preferred embodiment, the composition of invention is used as an additive in a petroleum product which is handled in an equipment chosen from a tank, a refining plant, a pipeline, a drilling well, a storage vessel, a transportation equipment or a filter.

The petroleum product may be a crude oil or any product which derives therefrom by any refining and/or extraction process. The petroleum product may also be a bitumen, such as bitumens of natural origin such as those present in natural bitumen or natural asphalt deposits, or bituminous sands, the bitumens originating from the refining of crude oil, in particular from the atmospheric and/or vacuum distillation of oil, it being possible for these bitumens to optionally be blown, visbroken and/or deasphalted and/or mixed.

The petroleum product is especially selected from crude petroleum oils; hydrocarbon fractions and residues deriving from the distillation thereof such as in heavy fuel oils, heavy residues; and bitumens.

The additive composition is advantageously used in an amount ranging from 1 to 5000 ppm by weight, preferably from 5 to 2000 ppm, more preferably from 10 to 1000 ppm and more preferably still from 15 to 500 ppm, expressed as total weight of said resins (a) and (b) with respect to the total weight of the petroleum product.

### The petroleum product

The petroleum product contains a crude oil or a product which results therefrom by any refining and/or extraction process, and an additive composition as described above.

The petroleum product may also contain a bitumen, such as bitumen of natural origin such as those present in natural bitumen or natural asphalt deposits, or bituminous sands, the bitumen originating from the refining of crude oil, in particular from the atmospheric and/or vacuum distillation of oil, it being possible for these bitumen to optionally be blown, visbroken and/or deasphalted and/or mixed.

The petroleum product preferably contains a crude petroleum oil and/or at least one hydrocarbon fraction or at least one residue deriving from the distillation of crude petroleum oil, such as heavy fuel oils, heavy residues and/or at least one bitumen.

The petroleum product contains a total amount of said resins (a) and (b) ranging from 1 to 5000 ppm by weight, preferably from 5 to 2000 ppm, more preferably from 10 to 1000 ppm and more preferably still from 15 to 500 ppm, expressed as total weight of said resins (a) and (b) with respect to the total weight of the petroleum product.

### The method

The method of the invention for preventing the precipitation of asphaltenes present in a petroleum product comprises a step of adding an additive composition as defined herein to said product.

The petroleum product is advantageously chosen from those described above.

The additive composition is preferably added in an amount ranging from 1 to 5000 ppm by weight, preferably from 5 to 2000 ppm, more preferably from 10 to 1000 ppm and more preferably still from 15 to 500 ppm, expressed as total weight of said resins (a) and (b) with respect to the total weight of the petroleum product.

According to a preferred embodiment, the method of the invention comprises at least two steps:
(1) the introduction of an additive composition as described above into the petroleum product, and
(2) a treatment step chosen from: a rise in pressure, a rise in temperature and a mixing with at least one other fluid.

According to a most preferred embodiment, steps (1) and (2) are carried out successively (step 1 and then step 2).

According to a preferred variant, step (2) is chosen from: an extraction of a crude oil from a reservoir, a stage of refining a crude oil or a derived product, a transportation of a crude oil or of a derived product, a filtration of a crude oil or of a derived product, an injection of gas into a crude oil or into a derived product, a mixing of crude oils or of derived products, and a mixing of a crude oil or of a derived product with a solvent.

Step (2) can for example correspond to a pressurization, for example in a pipeline or any type of pipe, or through a filter; it can comprise a heating in a refining plant, an injection of a gas or a mixing with another variety of crude oil or with another grade of heavy oil resulting from the refining.

Conventionally, such treatments result in a precipitation of asphaltenes and a fouling and/or a clogging of the equipments. The method of the invention makes it possible to keep the asphaltenes in dispersion during these treatments and to improve the compatibility of the asphaltenes with the non-asphaltenic part of the petroleum product.

The method of the invention is advantageously carried out in an equipment chosen from: a tank, a drilling well, a refining plant, a pipeline, a storage vessel, a transportation equipment or a filter.

The method can be carried out at any stage from the recovery of crude oils from a reservoir up to the refining and the use of the hydrocarbon fractions, via the transportation of the different petroleum products deriving therefrom. The invention is targeted at keeping the asphaltenes in dispersion in the medium, so as to improve the recovery of the crude oils, to stop, prevent, decrease or delay the precipitation of the asphaltenes, the formation of asphaltene deposits, the fouling in the tanks, treatment and transportation plants, such as the extraction or refining equipment, the pipelines, the pipes of all types, the filters, the storage vessels.

The example hereafter only aims at illustrating the present invention, and shall not be interpreted so as to limit its scope.

### EXAMPLES

### Example 1: Description of resins (a1) and (b1)

### Resin (a1):

As resin (a1), use was made of the cardanol-formaldehyde condensation resin marketed by the company Cardolite under trade name NX-4009.

### Resin (b1):

A modified alkylphenol-aldehyde was synthetised using the protocol described below.

Stage 1: In a first stage, an alkylphenol-aldehyde condensation resin was prepared by condensation of para-nonylphenol and formaldehyde (for example according to the procedure described in EP 857 776), with a viscosity at 50° C. of between 1800 and 4800 mPa·s (viscosity measured at 50° C. using a dynamic rheometer with a shear rate of 10 s⁻¹ on the resin diluted with 30% by weight of aromatic solvent (Solvesso 150 ^{®})).

Stage 2: In a second stage, the alkylphenol-aldehyde condensation resin resulting from the first stage was modified by a Mannich reaction by addition of 2 molar equivalents of formaldehyde and 2 molar equivalents of tallow dipropylenetriamine, known under the name N-(tallowalkyl)dipropylenetriamine and sold under the name Trinoram S^{®}.

The features of the modified alkylphenol-aldehyde resin obtained at the end of stage 2 are detailed in Table 1 below.

**Table 1**

| Resin | Solids content | Viscosity at 50°C (mPa·s) (*) | N_{Phe} (**) |
|---|---|---|---|
| (b1) | 70.10% | 4855 | 14.1 |

| | | | |
|---|---|---|---|
| (*) Viscosity at 50° C: measured on the resin diluted with 70% by weight of Solvesso 150^{®}, shear rate of 10 s⁻¹, using a Haake RheoWin ^{®} rheometer. (**) Evaluation of the mean number of phenol nuclei per resin molecule or N_{Phe}: measured by proton nuclear magnetic resonance. | | | |

### Example 2: Assessment of efficiency of additive compositions comprising resins (a1) and (b1)

Five additive compositions A1 to A5 were prepared by dissolving resins (a1) and/or (b1) with xylene as solvent. For each composition, the total amount of resin -including (a1) and (b1)- was 50% by weight.

The resins used for each composition is detailed in Table 2 below.

**Table 2**

| Additive composition | Resin (a1) | Resin (b1) |
|---|---|---|
| | wt% | wt% |
| A1 - invention | 90 | 10 |
| A2 - invention | 80 | 20 |
| A3 - invention | 70 | 30 |
| A4 - comparative | 100 | 0 |
| A5 - comparative | 0 | 100 |

The performances in terms of preventing asphaltene precipitation of the five compositions above was assessed on a Varandey crude oil, using an asphaltene dispersancy test (ATD)described below.

The ADT is a rapid test method which allows to assess the performance of an additive composition in preventing asphaltene precipitation in a crude oil. The test allows to compare the relative effectiveness of additive compositions in keeping asphaltene dispersed in a non-solvent medium. The ADT takes advantage of the insolubility of asphaltenes in an alkane diluent (n-hexane). Dilution of a fixed volume of crude oil in a fixed volume of alkane diluent results in precipitation of asphaltenes. Dilution of the same fixed volume of crude oil properly dosed with an effective additive composition in the same fixed volume of alkane diluent results in minimal precipitation of asphaltenes during a controlled testing period. An effective additive composition will prevent the agglomeration and eventual precipitation of asphaltenes when the crude oil sample is diluted in the alkane diluent.

The protocol of the ADT test is described below:

### 1. Preparation of solutions containing 1% by weight additive compositions

Five solutions S1 to S5 were respectively prepared as follows: in a 100 ml storage jar, 0.5g of each additive composition A1 to A5 was mixed with 50g toluene. Each mixture was agitated to ensure complete dissolution.

### 2. Evaluation of additive efficiency at 10 ppm treatment rate

In five centrifuge tubes, 10 µl of each composition S was mixed with 100 µl of crude oil and with 10 ml of n-hexane.

Each tube was vortexed for 30 seconds, and the tubes were then stored at room temperature for 360 hours.

The presence of sediments was assessed by visual observation of the tubes and the result of the test for each sample was evaluated as follows:
- Pass: no sediment was observed in the tube;
- Fail: the presence of sediments was observed in the tube.

The results obtained are detailed in Table 3 below

**Table 3**

| Additive composition | Result of ADT test 360h |
|---|---|
| A1 - invention | pass |
| A2 - invention | pass |
| A3 - invention | pass |
| A4 - comparative | fail |
| A5 - comparative | fail |

### 3. Evaluation of additive efficiency at 5 ppm treatment rate

In five centrifuge tubes, 5 µl of each composition S was mixed with 100 µl of crude oil and with 10 ml of n-hexane.

Each tube was vortexed for 30 seconds, and the tubes were then stored at room temperature for 168 hours.

The presence of sediments was assessed by visual observation of the tubes and the result of the test for each sample was evaluated as defined in point 2 above.

The results obtained are detailed in Table 4 below

**Table 4**

| Additive composition | Result of ADT test 168h |
|---|---|
| A1 - invention | pass |
| A2 - invention | pass |
| A3 - invention | pass |
| A4 - comparative | fail |
| A5 - comparative | fail |

The results detailed in Tables 3 and 4 above show that additive compositions A1 to A3 each containing a combination of resins (a1) and (b1) provide an effective prevention of asphaltene precipitation, which is not achieved with additive compositions A4 and A5 containing an identical amount of one of the two resins only.

These results illustrate the synergistic effect provided by the combination of the two resins of the present invention.

### Example 3: Assessment of efficiency of additive compositions comprising resins (a1) and (b1) on long-term storage

Three additive compositions A'1 to A'3 were prepared by dissolving resins (a1) and (b1) with xylene as solvent. For each composition, the total amount of resin (a1) + (b1) was 50% by weight.

The resins used for each composition is detailed in Table 5 below.

**Table 5**

| Additive composition | Resin (a1) | Resin (b1) |
|---|---|---|
| | wt% | wt% |
| A'1 - invention | 30 | 70 |
| A'2 - invention | 50 | 50 |
| A'3 - invention | 70 | 30 |

The efficiency in terms of preventing asphaltene precipitation on long term storage of the three compositions above was assessed by mixing thoroughly each composition in the Varandey crude oil, at respective treatment rates (total amount of active matter) of 10 ppm by weight, 25 ppm by weight, 50 ppm by weight and 100 ppm by weight.

The presence of sediments was assessed by visual observation of the samples, immediately after preparation and after storage thereof at room temperature for a duration detailed in table 6 below.

The results obtained are detailed in Table 6 below, in terms of percentage of asphaltene dispersion.

**Table 6**

| Test duration | 0h | 24h | 48h | 168h |
|---|---|---|---|---|
| Additive composition | | | | |
| A'1 | | | | |
| 10 ppm | 100% | 100% | 100% | 100% |
| 25 ppm | 100% | 100% | 100% | 100% |
| 50 ppm | 100% | 100% | 100% | 100% |
| 100 ppm | 100% | 100% | 100% | 100% |

| A'2 | | | | |
|---|---|---|---|---|
| 10 ppm | 100% | 100% | 100% | 100% |
| 25 ppm | 100% | 100% | 100% | 100% |
| 50 ppm | 100% | 100% | 100% | 100% |
| 100 ppm | 100% | 100% | 100% | 100% |

| A'3 | | | | |
|---|---|---|---|---|
| 10 ppm | 100% | 100% | 100% | 100% |
| 25 ppm | 100% | 100% | 100% | 100% |
| 50 ppm | 100% | 100% | 100% | 100% |
| 100 ppm | 100% | 100% | 100% | 100% |

The above results show that additive compositions A'1 to A'3 each containing a combination of resins (a1) and (b1) provide an effective prevention of asphaltene precipitation on long term-storage, as all compositions remained fully dispersed without any apparition of sediments.

## Claims

1. An additive composition comprising:
(a) at least one resin obtainable by condensation of at least one phenol substituted by a hydrocarbon group having from 12 to 24 carbon atoms with at least one aldehyde having from 1 to 8 carbon atoms; and
(b) at least one modified alkylphenol-aldehyde resin obtainable by a Mannich reaction of an alkylphenol-aldehyde condensation resin with at least one aldehyde and/or one ketone having from 1 to 8 carbon atoms and at least one hydrocarbon compound having at least one alkylamine group having from 1 to 30 carbon atoms,
said alkylphenol-aldehyde condensation resin being itself obtainable by condensation of
- at least one alkylphenol substituted by at least one linear or branched alkyl group having from 1 to 30 carbon atoms with
- at least one aldehyde and/or one ketone having from 1 to 8 carbon atoms;
the composition containing said resins (a) and (b) in a ratio by weight (a):(b) ranging from 5:95 to 95:5.

2. The composition as defined in the preceding claim, wherein said at least one phenol substituted by a hydrocarbon group used for obtaining said resin (a) corresponds to formula (I) below 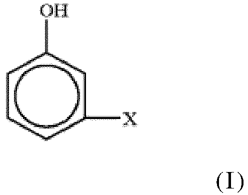 wherein X denotes a linear of branched, saturated on unsaturated hydrocarbon group containing from 12 to 24 carbon atoms, preferably from 12 to 18 carbon atoms and more preferably from 14 to 16 carbon atoms.

3. The composition as defined in any preceding claim, wherein said at least one phenol substituted by a hydrocarbon group used for obtaining said resin (a) is cardanol.

4. The composition as defined in any preceding claim, wherein the aldehyde used for obtaining said resin (a) contains from 1 to 4 carbon atoms, preferably said aldehyde is chosen from formaldehyde, acetaldehyde, propionaldehyde, butyraldehyde, 2-ethylhexanal, benzaldehyde and mixtures thereof, and more preferably said aldehyde is formaldehyde.

5. The composition as defined in any preceding claim, wherein said modified alkylphenol-aldehyde resin (b) is obtainable by a Mannich reaction of an alkylphenol-aldehyde condensation resin with at least one aldehyde and/or one ketone having from 1 to 4 carbon atoms and at least one hydrocarbon compound having at least one alkylmonoamine or alkylpolyamine group having between 4 and 30 carbon atoms,
said alkylphenol-aldehyde condensation resin is itself obtainable by condensation of
- at least one monoalkylphenol substituted by at least one linear or branched alkyl group having from 1 to 30 carbon atoms, with
- at least one aldehyde and/or one ketone having from 1 to 4 carbon atoms.

6. The composition as defined in any preceding claim, wherein said modified alkylphenol-aldehyde resin (b) is obtained by employing one and the same aldehyde or one and the same ketone as the aldehyde or ketone used for obtaining said alkylphenol-aldehyde condensation resin.

7. The composition as defined in any preceding claim, wherein said alkylphenol-aldehyde condensation resin is obtainable from at least one para-substituted alkylphenol, preferably para-nonylphenol.

8. The composition as defined in any preceding claim, wherein said at least one aldehyde and/or ketone used for obtaining said alkylphenol-aldehyde condensation resin is chosen from formaldehyde, acetaldehyde, propionaldehyde, butyraldehyde, 2-ethylhexanal, benzaldehyde or acetone, and preferably formaldehyde.

9. The composition as defined in any preceding claim, wherein said at least one hydrocarbon compound having at least one alkylamine group used for obtaining said modified alkylphenol-aldehyde resin (b) is chosen from alkylpolyamines having at least one primary amine group, preferably at least two primary amine groups and more preferably three primary amine groups, and comprising a fatty chain having from 12 to 24 carbon atoms, preferably from 12 to 22 carbon atoms.

10. The composition as defined in any preceding claim, containing said resins (a) and (b) in a ratio by weight (a):(b) ranging from 1:10 to 10:1.

11. The composition as defined in any preceding claim, further comprising one or more liquid organic solvent(s) chosen from:
- poly alkyl ethers, aliphatic hydrocarbons such as alkanes, aromatic solvents such as aromatic hydrocarbons and aromatic hetero-compounds;
- organic solvents derived from biomass, in particular oils of vegetable origin and more preferably cashew nutshell liquid;
- and mixtures thereof.

12. A petroleum product containing:
- a crude oil and/or at least one hydrocarbon fraction or at least one residue deriving from the distillation of a crude petroleum oil, and/or at least one bitumen; and
- an additive composition defined in any preceding claim
wherein the total amount of said resins (a) and (b) ranges from 1 to 5000 ppm by weight, with respect to the total weight of the petroleum product.

13. The petroleum product as defined in the preceding claim, containing a total amount of said resins (a) and (b) ranging from 5 to 2000 ppm, preferably from 10 to 1000 ppm and more preferably from 15 to 500 ppm, with respect to the total weight of the petroleum product.

14. Use of a composition as defined in any anyone of claims 1 to 11 as an additive in a petroleum product, preferably for preventing or reducing the precipitation of asphaltenes.

15. A method for preventing the precipitation of asphaltenes present in a petroleum product, comprising a step of adding to said product an additive composition as defined in any anyone of claims 1 to 11.

## Patentansprüche

1. Additivzusammensetzung umfassend:
(a) wenigstens ein Harz, erhältlich durch Kondensation wenigstens eines Phenols, das mit einer Kohlenwasserstoffgruppe mit 12 bis 24 Kohlenstoffatomen substituiert ist, mit wenigstens einem Aldehyd mit 1 bis 8 Kohlenstoffatomen; und
(b) wenigstens ein modifiziertes Alkylphenol-Aldehydharz, erhältlich durch Mannich-Reaktion eines Alkylphenol-Aldehyd-Kondensationsharzes mit wenigstens einem Aldehyd und/oder einem Keton mit 1 bis 8 Kohlenstoffatomen und wenigstens einer Kohlenwasserstoffverbindung mit wenigstens einer Alkylamingruppe mit 1 bis 30 Kohlenstoffatomen,
wobei das Alkylphenol-Aldehyd-Kondensationsharz seinerseits erhältlich ist durch Kondensation von
- wenigstens einem Alkylphenol, das mit wenigstens einer linearen oder verzweigten Alkylgruppe mit 1 bis 30 Kohlenstoffatomen substituiert ist, mit
- wenigstens einem Aldehyd und/oder einem Keton mit 1 bis 8 Kohlenstoffatomen;
wobei die Zusammensetzung die Harze (a) und (b) in einem Gewichtsverhältnis (a):(b) in dem Bereich von 5:95 bis 95:5 enthält.

2. Zusammensetzung nach dem vorstehenden Anspruch, wobei das zum Erhalten des Harzes (a) verwendete wenigstens eine mit einer Kohlenwasserstoffgruppe substituierte Phenol der nachstehenden Formel (I) entspricht 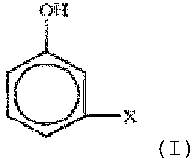 wobei X eine lineare oder verzweigte, gesättigte oder ungesättigte Kohlenwasserstoffgruppe mit 12 bis 24 Kohlenstoffatomen, vorzugsweise 12 bis 18 Kohlenstoffatomen und bevorzugter 14 bis 16 Kohlenstoffatomen, bedeutet.

3. Zusammensetzung nach einem der vorstehenden Ansprüche, wobei das zum Erhalten des Harzes (a) verwendete wenigstens eine mit einer Kohlenwasserstoffgruppe substituierte Phenol Cardanol ist.

4. Zusammensetzung nach einem der vorstehenden Ansprüche, wobei das zum Erhalten des Harzes (a) verwendete Aldehyd 1 bis 4 Kohlenstoffatome enthält, wobei das Aldehyd vorzugsweise ausgewählt ist aus Formaldehyd, Acetaldehyd, Propionaldehyd, Butyraldehyd, 2-Ethylhexanal, Benzaldehyd und Gemischen davon, und bevorzugter das Aldehyd Formaldehyd ist.

5. Zusammensetzung nach einem der vorstehenden Ansprüche, wobei das modifizierte Alkylphenol-Aldehydharz (b) durch eine Mannich-Reaktion eines Alkylphenol-Aldehyd-Kondensationsharzes mit wenigstens einem Aldehyd und/oder einem Keton mit 1 bis 4 Kohlenstoffatomen und wenigstens einer Kohlenwasserstoffverbindung mit wenigstens einer Alkylmonoamin- oder Alkylpolyamingruppe mit zwischen 4 und 30 Kohlenstoffatomen erhältlich ist, wobei das Alkylphenol-Aldehyd-Kondensationsharz seinerseits erhältlich ist durch Kondensation von
- wenigstens einem Monoalkylphenol, substituiert mit wenigstens einer linearen oder verzweigten Alkylgruppe mit 1 bis 30 Kohlenstoffatomen, mit
- wenigstens einem Aldehyd und/oder einem Keton mit 1 bis 4 Kohlenstoffatomen.

6. Zusammensetzung nach einem der vorstehenden Ansprüche, wobei das modifizierte Alkylphenol-Aldehyd-Harz (b) durch Verwendung von ein und demselben Aldehyd oder ein und demselben Keton wie dem Aldehyd oder dem Keton, der/das zum Erhalten des Alkylphenol-Aldehyd-Kondensationsharzes verwendet wird, erhalten ist.

7. Zusammensetzung nach einem der vorstehenden Ansprüche, wobei das Alkylphenol-Aldehyd-Kondensationsharz aus wenigstens einem parasubstituierten Alkylphenol, vorzugsweise para-Nonylphenol, erhältlich ist.

8. Zusammensetzung nach einem der vorstehenden Ansprüche, wobei das zum Erhalten des Alkylphenol-Aldehyd-Kondensationsharzes verwendete wenigstens eine Aldehyd und/oder Keton ausgewählt ist aus Formaldehyd, Acetaldehyd, Propionaldehyd, Butyraldehyd, 2-Ethylhexanal, Benzaldehyd oder Aceton, vorzugsweise Formaldehyd.

9. Zusammensetzung nach einem der vorstehenden Ansprüche, wobei die zum Erhalten des modifizierten Alkylphenol-Aldehydharzes (b) verwendete wenigstens eine Kohlenwasserstoffverbindung mit wenigstens einer Alkylamingruppe ausgewählt ist aus Alkylpolyaminen mit wenigstens einer primären Amingruppe, vorzugsweise wenigstens zwei primären Amingruppen und bevorzugter drei primären Amingruppen, und umfassend eine Fettkette mit 12 bis 24 Kohlenstoffatomen, vorzugsweise 12 bis 22 Kohlenstoffatomen.

10. Zusammensetzung nach einem der vorstehenden Ansprüche, enthaltend die Harze (a) und (b) in einem Gewichtsverhältnis (a):(b) in dem Bereich von 1:10 bis 10:1.

11. Zusammensetzung nach einem der vorstehenden Ansprüche, ferner umfassend ein oder mehrere flüssige organische Lösungsmittel ausgewählt aus:
- Polyalkylethern, aliphatischen Kohlenwasserstoffen, wie z.B. Alkanen, aromatischen Lösungsmitteln, wie z.B. aromatischen Kohlenwasserstoffen und aromatischen Heteroverbindungen;
- organischen Lösungsmitteln, die aus Biomasse abgeleitet sind, insbesondere Öle pflanzlichen Ursprungs und bevorzugter Cashew-Nussschalenflüssigkeit;
- und Gemischen davon.

12. Erdölprodukt enthaltend:
- ein Rohöl und/oder wenigstens eine Kohlenwasserstofffraktion oder wenigstens einen Rückstand abgeleitet durch Destillation eines Erdöl-Rohöls, und/oder wenigstens ein Bitumen; und
- eine Additivzusammensetzung nach einem der vorstehenden Ansprüche,
wobei die Gesamtmenge der Harze (a) und (b) in dem Bereich von 1 bis 5000 Gew.-ppm, bezogen auf das Gesamtgewicht des Erdölprodukts, liegt.

13. Erdölprodukt nach dem vorstehenden Anspruch, enthaltend eine Gesamtmenge der Harze (a) und (b) in dem Bereich von 5 bis 2000 ppm, vorzugsweise von 10 bis 1000 ppm und bevorzugter von 15 bis 500 ppm, bezogen auf das Gesamtgewicht des Erdölprodukts.

14. Verwendung einer Zusammensetzung nach einem der Ansprüche 1 bis 11 als Additiv in einem Erdölprodukt, vorzugsweise zum Verhindern oder Verringern der Präzipitation von Asphaltenen.

15. Verfahren zum Verhindern der Präzipitation von in einem Erdölprodukt vorhandenen Asphaltenen, umfassend einen Schritt des Zugebens einer Additivzusammensetzung nach einem der Ansprüche 1 bis 11 zu dem Produkt.

## Revendications

1. Composition d'additif comprenant :
(a) au moins une résine susceptible d'être obtenue par condensation d'au moins un phénol substitué par un groupe hydrocarboné ayant de 12 à 24 atomes de carbone avec au moins un aldéhyde ayant de 1 à 8 atomes de carbone ; et
(b) au moins une résine alkylphénol-aldéhyde modifiée susceptible d'être obtenue par une réaction de Mannich d'une résine de condensation alkylphénol-aldéhyde avec au moins un aldéhyde et/ou une cétone ayant de 1 à 8 atomes de carbone et au moins un composé hydrocarboné ayant au moins un groupe alkylamine ayant de 1 à 30 atomes de carbone,
ladite résine de condensation alkylphénol-aldéhyde étant elle-même susceptible d'être obtenue par condensation de
- au moins un alkylphénol substitué par au moins un groupe alkyle linéaire ou ramifié ayant de 1 à 30 atomes de carbone avec
- au moins un aldéhyde et/ou une cétone ayant de 1 à 8 atomes de carbone ;
la composition contenant lesdites résines (a) et (b) en un rapport pondéral (a):(b) allant de 5:95 à 95:5.

2. Composition telle que définie dans la revendication précédente, dans laquelle ledit au moins un phénol substitué par un groupe hydrocarboné utilisé pour l'obtention de ladite résine (a) correspond à la formule (I) suivante 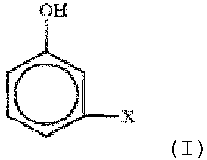 dans laquelle X désigne un groupe hydrocarboné linéaire ou ramifié, saturé insaturé contenant de 12 à 24 atomes de carbone, préférablement de 12 à 18 atomes de carbone et plus préférablement de 14 à 16 atomes de carbone.

3. Composition selon l'une quelconque des revendications précédentes, dans laquelle ledit au moins un phénol substitué par un groupe hydrocarboné utilisé pour obtenir ladite résine (a) est le cardanol.

4. Composition telle que définie dans l'une quelconque des revendications précédentes, dans laquelle l'aldéhyde utilisé pour obtenir ladite résine (a) contient de 1 à 4 atomes de carbone, préférablement ledit aldéhyde est choisi parmi le formaldéhyde, l'acétaldéhyde, le propionaldéhyde, le butyraldéhyde, le 2-éthylhexanal, le benzaldéhyde et leurs mélanges, et plus préférablement, ledit aldéhyde est le formaldéhyde.

5. Composition selon l'une quelconque des revendications précédentes, dans laquelle ladite résine alkylphénol-aldéhyde modifiée (b) est susceptible d'être obtenue par une réaction de Mannich d'une résine de condensation alkylphénol-aldéhyde avec au moins un aldéhyde et/ou une cétone ayant de 1 à 4 atomes de carbone et au moins un composé hydrocarboné ayant au moins un groupe alkylmonoamine ou alkylpolyamine ayant entre 4 et 30 atomes de carbone,
ladite résine de condensation alkylphénol-aldéhyde étant elle-même susceptible d'être obtenue par condensation de
- au moins un monoalkylphénol substitué par au moins un groupe alkyle linéaire ou ramifié ayant de 1 à 30 atomes de carbone, avec
- au moins un aldéhyde et/ou une cétone ayant de 1 à 4 atomes de carbone.

6. Composition selon l'une quelconque des revendications précédentes, dans laquelle ladite résine alkylphénol-aldéhyde modifiée (b) est obtenue en employant un seul et même aldéhyde ou une seule et même cétone que l'aldéhyde ou la cétone utilisé(e) pour obtenir ladite résine de condensation alkylphénol-aldéhyde.

7. Composition selon l'une quelconque des revendications précédentes, dans laquelle ladite résine de condensation alkylphénol-aldéhyde est susceptible d'être obtenue à partir d'au moins un alkylphénol para-substitué, préférablement le para-nonylphénol.

8. Composition telle que définie selon l'une quelconque des revendications précédentes, dans laquelle ledit au moins un aldéhyde et/ou ladite au moins une cétone utilisé(e) pour obtenir ladite résine de condensation alkylphénol-aldéhyde est choisi(e) parmi le formaldéhyde, l'acétaldéhyde, le propionaldéhyde, le butyraldéhyde, le 2-éthylhexanal, le benzaldéhyde ou l'acétone, et préférablement le formaldéhyde.

9. Composition telle que définie dans l'une quelconque des revendications précédentes, dans laquelle ledit au moins un composé hydrocarboné ayant au moins un groupe alkylamine utilisé pour obtenir ladite résine alkylphénol-aldéhyde modifiée (b) est choisi parmi les alkylpolyamines ayant au moins un groupe amine primaire, préférablement au moins deux groupes amine primaire et plus préférablement trois groupes amine primaire, et comprenant une chaîne grasse ayant de 12 à 24 atomes de carbone, préférablement de 12 à 22 atomes de carbone.

10. Composition telle que définie dans l'une quelconque des revendications précédentes, contenant lesdites résines (a) et (b) en un rapport pondéral (a):(b) allant de 1:10 à 10:1.

11. Composition telle que définie dans l'une quelconque des revendications précédentes, comprenant en outre un ou plusieurs solvant(s) organique(s) liquide(s) choisi(s) parmi :
- les polyalkyléthers, les hydrocarbures aliphatiques tels que les alcanes, les solvants aromatiques tels que les hydrocarbures aromatiques et les composés hétéroaromatiques ;
- les solvants organiques issus d'une biomasse, en particulier les huiles d'origine végétale et plus préférablement le liquide de coquille de noix de cajou ;
- et leurs mélanges.

12. Produit pétrolier contenant :
- une huile brute et/ou au moins une fraction d'hydrocarbure ou au moins un résidu issu de la distillation d'une huile de pétrole brut, et/ou au moins un bitume ; et
- une composition d'additif définie dans l'une quelconque des revendications précédentes dans lequel la quantité totale desdites résines (a) et (b) va de 1 à 5 000 ppm en masse par rapport à la masse totale du produit pétrolier.

13. Produit pétrolier tel que défini dans la revendication précédente, contenant une quantité totale desdites résines (a) et (b) allant de 5 à 2 000 ppm, préférablement de 10 à 1 000 ppm et plus préférablement de 15 à 500 ppm, par rapport à la masse totale du produit pétrolier.

14. Utilisation d'une composition telle que définie dans l'une quelconque des revendications 1 à 11 comme additif dans un produit pétrolier, préférablement pour empêcher ou réduire la précipitation d'asphaltènes.

15. Procédé pour empêcher la précipitation des asphaltènes présents dans un produit pétrolier, comprenant une étape d'ajout audit produit d'une composition d'additif telle que définie dans l'une quelconque des revendications 1 à 11.
